# EUROPÄISCHE PATENTANMELDUNG

(11) **EP 4 667 251 A1**
(43) Veröffentlichungstag der Anmeldung: **24.12.2025**
(21) Anmeldenummer: 24207393.0
(22) Anmeldetag: 18.10.2024
(51) Int. Cl.: B60J 1/00, B60J 1/10, E06B 1/60

(54) **ADAPTERRAHMENSYSTEM FÜR EINE FAHRZEUGINNENRAUMSEITIGE ANORDNUNG AN EINEM RAHMENFENSTER EINES CARAVANING-FAHRZEUGS**

(30) Priorität: 20.06.2024 DE 102024117343
(71) Anmelder: BOS Technology Services GmbH, 73760 Ostfildern (DE)
(72) Erfinder: Späth, Nico, 73773 Aichwald (DE); Sang, Johannes, 55278 Undenheim (DE)
(74) Vertreter: Patentanwälte Ruff, Wilhelm, Beier, Dauster & Partner mbB

(57) **Zusammenfassung**

1. Adapterrahmensystem für eine fahrzeuginnenraumseitige Anordnung an einem Rahmenfenster eines Caravaning-Fahrzeugs.

2.1 Ein derartiges Adapterrahmensystem mit einem Adapterrahmen, der wenigstens drei, miteinander an Eckbereichen verbundene Rahmenprofilabschnitte aufweist, sowie mit einer Fixiereinrichtung zur Befestigung des Adapterrahmens relativ zu dem Rahmenfenster und relativ zu einem Fahrzeugwandungsausschnitt, in dem das Rahmenfenster montiert ist, ist bekannt.

2.2 Erfindungsgemäß ist an jedem Rahmenprofilabschnitt des Adapterrahmens rückseitig wenigstens ein Fixierstück montierbar, das derart gestaltet ist, dass das Fixierstück kraft- und/oder formschlüssig in einen Spalt zwischen dem Ausschnitt der Fahrzeugwandung und dem Rahmenfenster einfügbar ist.

## Beschreibung

Die Erfindung betrifft ein Adapterrahmensystem für eine fahrzeuginnenraumseitige Anordnung an einem Rahmenfenster eines Caravaning-Fahrzeugs, mit einem Adapterrahmen, der wenigstens drei miteinander an Eckbereichen verbundene Rahmenprofilabschnitte aufweist, sowie mit einer Fixiereinrichtung zur Befestigung des Adapterrahmens relativ zu dem Rahmenfenster und relativ zu einem Fahrzeugwandungsausschnitt, in dem das Rahmenfenster montiert ist.

Es ist bekannt (https://www.promobil.de/tipp/fenstertypen-und-hersteller-fuer-wohnmobile-undwohnwagen-im-vergleich/), bei einem Caravaning-Fahrzeug in einem Ausschnitt einer Fahrzeugwandung ein Rahmenfenster zu montieren. Ein derartiges Rahmenfenster weist einen zweiteiligen Rahmen auf, nämlich einen Innenrahmen und einen Außenrahmen. Die beiden Rahmenteile umschließen eine Acryl-Doppelglasscheibe und werden in dem Ausschnitt der Fahrzeugwandung miteinander verschraubt. Dabei klemmen die Rahmenteile sich fest in den Ausschnitt der Fahrzeugwandung hinein. Eine verbleibende Nut zwischen dem Rahmen des Rahmenfensters und einem umlaufenden, rechteckigen Rand des Ausschnitts der Fahrzeugwandung wird mithilfe von Dichtungsmasse gefüllt.

Um zu einem Fahrzeuginnenraum hin eine optisch ansprechende Verblendung des mit Dichtmasse gefüllten Spalts zwischen dem Rahmenfenster und dem umlaufenden Rand des Ausschnitts der Fahrzeugwandung zu erzielen, wird ein Adapterrahmen vorgesehen, der mithilfe von Klettband oder Klebeband an der Innenseite der Fahrzeugwandung fixiert wird.

Aufgabe der Erfindung ist es, ein Adapterrahmensystem der eingangs genannten Art zu schaffen, das unabhängig von thermischen Einflüssen eine zuverlässige Montage eines Adapterrahmens ermöglicht.

Diese Aufgabe wird dadurch gelöst, dass an jedem Rahmenprofilabschnitt des Adapterrahmens rückseitig wenigstens ein Fixierstück montiert ist, das derart gestaltet ist, dass das Fixierstück kraft- und/oder formschlüssig in einen Spalt zwischen dem Ausschnitt der Fahrzeugwandung und dem Rahmenfenster einfügbar ist. Die erfindungsgemäße Lösung eignet sich für Caravaning-Fahrzeuge zu Land und zu Wasser, insbesondere mit einem Fahrantrieb oder auch als geschleppte Fahrzeuge. Besonders bevorzugt ist die erfindungsgemäße Lösung einsetzbar bei Radfahrzeugen in Form von Reisemobilen und Wohnwägen. Dadurch, dass die Rahmenprofilabschnitte mittels der Fixierstücke mechanisch im Bereich des Ausschnitts der Fahrzeugwandung auf einer zu einem Fahrzeuginnenraum gewandten Innenseite montierbar sind, ergibt sich eine Unabhängigkeit von Temperatureinflüssen. Zudem ist eine besonders einfache und funktionssichere Montage des Adapterrahmensystems möglich. Der Adapterrahmen kann lediglich zur optischen Verblendung des Spalts zwischen dem Rahmenfenster und einem umlaufenden Rand des Ausschnitts der Fahrzeugwandung vorgesehen sein, oder der Adapterrahmen kann eine Zusatzfunktion aufweisen, insbesondere eine Halterungsfunktion für ein fahrzeuginnenraumseitig angebrachtes Verdunklungssystem, insbesondere ein Fensterbeschattungssystem.

In Ausgestaltung der Erfindung ist jedes Fixierstück als einstückiges Kunststoffteil gestaltet und derart profiliert, dass das Fixierstück werkzeuglos rückseitig an dem zugeordneten Rahmenprofilabschnitt des Adapterrahmens montierbar ist. Insbesondere sind das Fixierstück und der Rahmenprofilabschnitt miteinander verklipsbar.

In weiterer Ausgestaltung der Erfindung weist der Rahmenprofilabschnitt eine hinterschnittene Längsnut auf, und das Fixierstück weist einen Rahmenmontageabschnitt auf, der derart dimensioniert ist, dass der Rahmenmontageabschnitt in die Längsnut einklipsbar und unter geringem manuellen Kraftaufwand längs der Längsnut verschiebbar ist. Der Rahmenmontageabschnitt ist insbesondere als Raststeg ausgeführt. Der Rahmenmontageabschnitt ist quer zu der Längsnut in diese einklipsbar. Zudem sind der Rahmenmontageabschnitt und die Längsnut derart aufeinander abgestimmt, dass in Längsrichtung der Längsnut zwar eine gewisse Klemmung zwischen dem Rahmenmontageabschnitt und der Längsnut vorhanden ist, dass aber mit geringem manuellem Kraftaufwand eine Verschiebbarkeit des Rahmenprofilabschnitts relativ zu dem Fixierstück gewährleistet ist. Dadurch ist es möglich, den Rahmenprofilabschnitt in seiner Längsrichtung relativ zu dem Fixierstück und damit relativ zu dem Ausschnitt in der Fahrzeugwandung zu justieren.

In weiterer Ausgestaltung der Erfindung weist das Fixierstück einen Fenstermontageabschnitt auf, der einen Stecksteg und wenigstens zwei zu wenigstens einer Seite von dem Stecksteg abragende, elastisch bewegliche Widerhaken aufweist, Mittels des Fenstermontageabschnitts ist das Fixierstück in einem Spalt zwischen einer Randkontur des Rahmenfensters und dem Randbereich des Ausschnitts der Fahrzeugwandung kraftschlüssig oder formschlüssig fixierbar. Die elastisch beweglichen Widerhaken ermöglichen bei einem entsprechenden Einsteckvorgang des Fenstermontageabschnitts orthogonal zu einer Wandungsebene der Fahrzeugwandung vorzugsweise ein Hintergreifen einer entsprechenden Stegprofilierung der Randkontur des Rahmenfensters, so dass das Fixierstück in dem Spalt zwischen Rahmenfenster und Ausschnitt der Fahrzeugwandung in montiertem Zustand zusätzlich zu einem Kraftschluss noch verrastet ist. Die elastisch beweglichen Widerhaken werden bei einem Einstecken des Fixierstücks in den Spalt zwischen der Randkontur des Rahmenfensters und dem Randbereich des Ausschnitts der Fahrzeugwandung elastisch deformiert und wirken nach Art von Blattfedern nach außen, wodurch das Fixierstück in dem Spalt verklemmbar ist.

In weiterer Ausgestaltung der Erfindung weist der Stecksteg eine Stegspitze mit mehreren an seiner Außenkontur auf gegenüberliegenden Seiten zueinander parallel beabstandeten Längsprofilierungen auf, und das Rahmenfenster ist mit einer längserstreckten Stegaufnahme versehen, in die die Stegspitze in betriebsfertig montiertem Zustand kraft- oder formschlüssig eintaucht. Hierdurch wird die Sicherung des Adapterrahmens relativ zum Rahmenfenster weiter verbessert.

In weiterer Ausgestaltung der Erfindung ist die Stegaufnahme mit zu den Längsprofilierungen der Stegspitze derart komplementären Aufnahmeprofilierungen versehen, dass die Stegspitze in betriebsfertig montiertem Zustand formschlüssig in der Stegaufnahme gehalten ist. Die Stegspitze des Stecksteges rastet somit in die Stegaufnahme ein und bildet einen besonders sicheren und positionsgetreuen Rückhalt für den Adapterrahmen. In weiterer Ausgestaltung der Erfindung ist der Rahmenmontageabschnitt relativ zu einer Steckachse des Steckstegs radial versetzt angeordnet. Dadurch können auch eine Längsnut des Rahmenprofilabschnitts des Adapterrahmens und der Spalt zwischen dem Rahmenfenster und dem Ausschnitt der Fahrzeugwandung längs der Ebene der Fahrzeugwandung zueinander versetzt sein.

In weiterer Ausgestaltung der Erfindung weist der Rahmenmontageabschnitt eine Rastnase auf, die in montiertem Zustand des Fixierstücks an dem Rahmenprofilabschnitt einen Hinterschnitt der Längsnut des Rahmenprofilabschnitts hintergreift. Dadurch ist in einfacher Weise eine Verrastung, d. h. Verklipsung, zwischen dem Fixierstück und dem Rahmenprofilabschnitt erzielbar.

In weiterer Ausgestaltung der Erfindung sind drei Rahmenprofilabschnitte vorgesehen, die mittels Eckverbindungen zu einem U-förmigen Adapterrahmen zusammengefügt sind. Der Adapterrahmen kann gemäß einer Variante auch rechteckig mit insgesamt vier Rahmenprofilabschnitten ausgebildet sein. Bei der hier beschriebenen Ausgestaltung sind lediglich drei Rahmenprofilabschnitte vorgesehen, die sich zu einer U-Form ergänzen. Dabei sind vorteilhaft zwei zueinander parallele Rahmenprofilabschnitte in montiertem Zustand in Fahrzeughochrichtung auf gegenüberliegenden Seiten des Rahmenfensters und damit des Ausschnitts der Fahrzeugwandung ausgerichtet und ein dritter Rahmenprofilabschnitt verbindet an oberen Stirnenden die beiden in Hochrichtung erstreckten Rahmenprofilabschnitte miteinander und ist dementsprechend horizontal, d. h. je nach Anordnung des Ausschnitts der Fahrzeugwandung in Fahrzeugquerrichtung oder Fahrzeuglängsrichtung ausgerichtet. Nach unten hin ist der Adapterrahmen in fahrzeugseitig montiertem Zustand offen.

In weiterer Ausgestaltung der Erfindung ist an dem Adapterrahmen ein Verdunklungssystem mit einem zwischen einer kompakt abgelegten Ruhestellung und einer längs des Adapterrahmens ausgezogenen Funktionsstellung beweglich gelagerten, flexiblen Verdunklungsbahn befestigt. Das Verdunklungssystem kann als Rollosystem oder auch als leporelloartiges Faltsystem vorgesehen sein.

In weiterer Ausgestaltung der Erfindung ist der Adapterrahmen derart relativ zu dem Rahmenfenster montierbar, dass die Verdunklungsbahn in Hochrichtung oben in der Ruhestellung und unten in der Funktionsstellung ausgerichtet ist. Die Verdunklungsbahn des Verdunklungssystems wird daher von oben nach unten ausgezogen in betriebsfertig montiertem Zustand im Caravaning-Fahrzeug.

Aufgabe der Erfindung ist es zudem, ein Verfahren und eine Vorrichtung zur Montage eines Rahmenfensters in einem Ausschnitt einer Fahrzeugwandung eines Caravaning-Fahrzeugs derart zu verbessern, dass eine zuverlässige Abdichtung des Ausschnitts der Fahrzeugwandung erzielbar ist.

Diese Aufgabe wird für das Verfahren dadurch gelöst, dass mehrere identische Fixierstücke zur Justierung des Rahmenfensters in dem Ausschnitt der Fahrzeugwandung vorgesehen sind, die als einstückige Kunststoffteile ausgeführt sind und jeweils einen formsteifen Stecksteg sowie wenigstens zwei zu wenigstens einer Seite im Wesentlichen radial zu dem Stecksteg abragende und an dem Stecksteg angeformte, begrenzt elastisch bewegliche Widerhaken aufweisen, wobei wenigstens zwei Fixierstücke an gegenüberliegenden Randbereichen des Ausschnitts zur Ausrichtung des Rahmenfensters relativ zu den Randbereichen eingefügt werden, und dass anschließend das Rahmenfenster in dem Ausschnitt befestigt wird. Die Fixierstücke dienen demzufolge zur sicheren und gleichmäßigen Zentrierung des Rahmenfensters in dem Ausschnitt, so dass eine relativ zu dem Ausschnitt versetzte Fixierung des Rahmenfensters im Ausschnitt, wie dies beim Stand der Technik möglich ist, vermieden werden kann. Hierdurch ergibt sich zum einen eine optisch gleichmäßige, ansprechende Ausrichtung des Rahmenfensters innerhalb des Ausschnitts der Fahrzeugwandung. Zum anderen ist gewährleistet, dass eine Randkontur des Rahmenfensters umlaufend gleichmäßig in dem Ausschnitt der Fahrzeugwandung abgedichtet werden kann. Dadurch ist eine besonders sichere thermische Isolierung des Fahrzeuginnenraums auch im Bereich eines Ausschnitts der Fahrzeugwandung erzielbar.

In Ausgestaltung des Verfahrens wird nach einer Ausrichtung und Fixierung des Rahmenfensters innerhalb des Ausschnitts der Fahrzeugwandung ein Adapterrahmen innenseitig an den Fixierstücken befestigt und relativ zu dem Rahmenfenster in Fahrzeughochrichtung und/oder Fahrzeugquerrichtung oder Fahrzeuglängsrichtung ausgerichtet. Dadurch ist eine optisch ansprechende, zentrierte Verblendung des Rahmenfensters auf der dem Fahrzeuginnenraum zugewandten Innenseite der Fahrzeugwandung erreichbar. Die Fahrzeugwandung kann als in Längsrichtung des Caravaning-Fahrzeugs ausgerichtete Längswandung oder als eine in Querrichtung des Caravaning-Fahrzeugs ausgerichtete Querwandung ausgeführt sein.

In weiterer Ausgestaltung der Erfindung wird an dem Adapterrahmen ein Verdunklungssystem angebracht. Dadurch wird in mehreren aufeinanderfolgenden Montageschritten der Ausschnitt in der Fahrzeugwandung verschlossen und verblendet. Zudem wird die Möglichkeit einer Verdunklung des Rahmenfensters gewährt.

Als Fahrzeugwandung ist vorzugsweise eine Wandung eines Aufbaus eines Caravaning-Fahrzeugs, insbesondere eine in Sandwichbauweise hergestellte, ebene und plattenförmige Wandung vorgesehen.

Für die Vorrichtung zur Montage des Rahmenfensters in einem Ausschnitt einer Fahrzeugwandung eines Caravaning-Fahrzeugs wird die der Erfindung zugrunde liegende Aufgabe durch die Merkmale des Anspruchs 15 gelöst. Die Vorrichtung weist mehrere, zueinander identische Fixierstücke auf, die als einstückige Kunststoffteile ausgeführt sind und jeweils einen formsteifen Stecksteg sowie wenigstens zwei zu wenigstens einer Seite im Wesentlichen radial zu dem Stecksteg abragende und an dem Stecksteg angeformte, begrenzt elastisch bewegliche Widerhaken aufweisen. Die Fixierstücke sind in montiertem Zustand in einem Spalt zwischen dem Rahmenfenster und einem Rand des Ausschnitts der Fahrzeugwandung kraft- oder formschlüssig positioniert und stützen sich mit den Widerhaken an dem Rand des Ausschnitts und/oder an einer Randkontur des Rahmenfensters ab. Die Widerhaken üben eine Federkraft auf jedes Fixierstück quer zur Steckrichtung jedes Fixierstücks aus, so dass jedes Fixierstück mittels der Widerhaken in dem Spalt zwischen dem Rahmenfenster und dem Rand des Ausschnitts der Fahrzeugwandung in montiertem Zustand verklemmt ist. Erfindungsgemäß ist insbesondere vorgesehen, dass der Stecksteg eine Stegspitze mit mehreren, an seiner Außenkontur auf gegenüberliegenden Seiten zueinander parallel beabstandeten Längsprofilierungen aufweist, und dass das Rahmenfenster mit einer längserstreckten Stegaufnahme versehen ist, in die die Stegspitze in betriebsfertig montiertem Zustand kraft- oder formschlüssig eintaucht, und dass insbesondere die Stegaufnahme mit zu den Längsprofilierungen der Stegspitze derart komplementären Aufnahmeprofilierungen versehen ist, dass die Stegspitze in betriebsfertig montiertem Zustand formschlüssig in der Stegaufnahme gehalten ist..

In Ausgestaltung der Vorrichtung weisen die Fixierstücke jeweils versetzt zu dem Stecksteg einen Rahmenmontageabschnitt auf, insbesondere in Form eines Raststegs, der über die Fahrzeugwandung nach innen abragt, und an dem jeweils ein Rahmenprofilabschnitt eines Adapterrahmens werkzeuglos formschlüssig fixierbar ist. Der jeweilige Rahmenprofilabschnitt des Adapterrahmens wird vorzugsweise auf den Rahmenmontageabschnitt des Fixierstücks aufgerastet, d. h. aufgeklipst, wobei nach dem Aufklipsen eine begrenzte Verschiebbarkeit des Rahmenprofilabschnitts relativ zu dem Fixierstück ermöglicht ist, so dass die Rahmenprofilabschnitte des Adapterrahmens relativ zu dem Ausschnitt der Fahrzeugwandung entlang der Ebene der Fahrzeugwandung justiert werden können. Der Rahmenmontageabschnitt jedes Fixierstücks bildet somit ein Loslager, das zwar eine Sicherung des jeweiligen Rahmenprofilabschnitts in Steckrichtung an dem Fixierstück ermöglicht, jedoch in Fahrzeughochrichtung und Fahrzeuglängsrichtung oder Fahrzeugquerrichtung - je nach Anordnung des Ausschnitts in der Fahrzeugwandung - zulässt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Innenansicht einen Teilbereich einer Fahrzeugwandung eines Caravaning-Fahrzeugs mit einem Rahmenfenster und einer Ausführungsform eines erfindungsgemäßen Adapterrahmensystems,
- Fig. 2: in perspektivischer, vergrößerter Darstellung einen teilweise aufgeschnittenen Teilbereich der Anordnung nach Fig. 1,
- Fig. 3: in vergrößerter Darstellung einen Querschnitt durch den Teilbereich gemäß Fig. 2,
- Fig. 4: schematisch einen teilweise aufgeschnittenen Teilbereich einer Fahrzeugwandung eines Caravaning-Fahrzeugs mit einer weiteren Ausführungsform eines Rahmenfensters und einer weiteren Ausführungsform eines erfindungsgemäßen Adapterrahmensystems und
- Fig. 5: in vergrößerter perspektivischer Darstellung ein Fixierstück gemäß Fig. 4 für das Adapterrahmensystem gemäß Fig. 4.

Ein nicht dargestelltes Caravaning-Fahrzeug in Form eines Reisemobils weist eine seitliche Fahrzeugwandung F auf, die in Sandwichbauweise als Wandungsplatte eines Fahrzeugaufbaus des Caravaning-Fahrzeugs ausgeführt ist. In der Fahrzeugwandung F ist ein rechteckiger Ausschnitt vorgesehen, der einen Fahrzeuginnenraum zu einer Fahrzeugumgebung hin öffnet. Der rechteckige Ausschnitt in der Fahrzeugwandung F weist einen umlaufenden Randbereich R auf, der den Ausschnitt begrenzt.

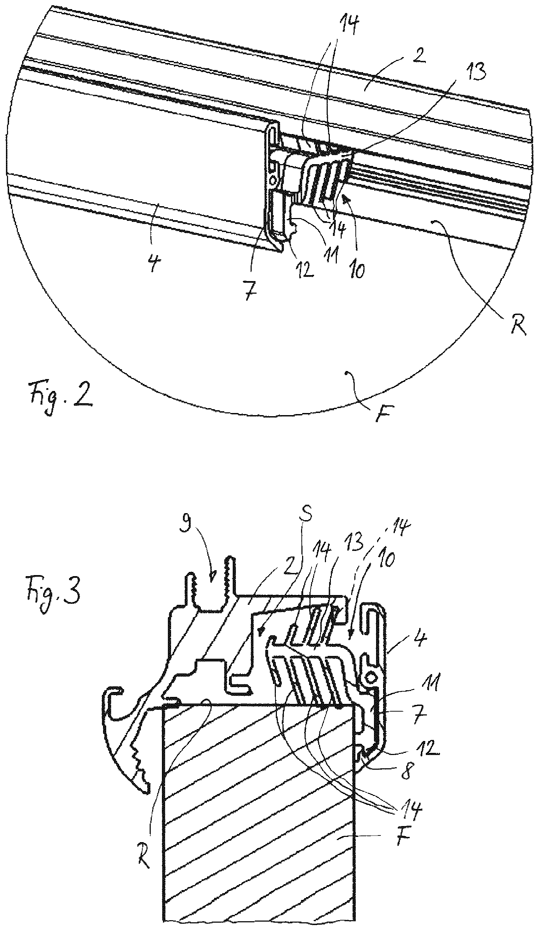

In betriebsfertig montiertem Zustand ist in dem Ausschnitt der Fahrzeugwandung F ein Rahmenfenster 1 montiert, das eine Scheibenanordnung aus Acrylgas und einen umlaufenden Fensterrahmen 2 aufweist. Der Fensterrahmen 2 nimmt in einer Aufnahmenut 9 die Acrylglas-Scheibenanordnung auf (Fig. 3). Der Fensterrahmen 2 weist eine rechteckige Grundfläche auf, die derart dimensioniert ist, dass der Fensterrahmen 2 und damit das Rahmenfenster 1 in dem Ausschnitt der Fahrzeugwandung F aufgenommen werden kann. Das Rahmenfenster 1 verschließt den Ausschnitt in betriebsfertig montiertem Zustand.

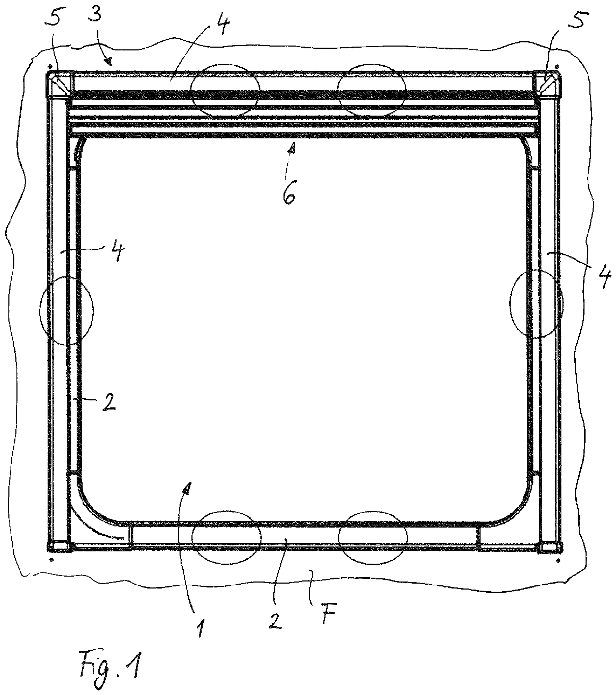

Zur Justierung des Rahmenfensters 1 relativ zu dem Randbereich R des Ausschnitts der Fahrzeugwandung F sind mehrere Fixierstücke 10 über den Umfang des Randbereichs R des Ausschnitts verteilt angeordnet. Eine Anordnung von insgesamt sechs Fixierstücken 10 ist in Fig. 1 anhand der insgesamt sechs Ovallinien verdeutlicht. Sowohl die Anzahl der Fixierstücke 10 als auch die Anordnung gemäß Fig. 1 sind nicht zwingend. Es sind auch andere Varianten denkbar. Die Anordnung in Fig. 1 zeigt lediglich eine vorteilhafte Variante, wobei jeweils zwei Fixierstücke 10 zueinander beabstandet im Bereich eines oberen und des unteren horizontalen Rahmenverlaufs des Fensterrahmens 2 positioniert sind. An den auf gegenüberliegenden Seiten in Hochrichtung erstreckten Rahmenabschnitten des Fensterrahmens 2 ist jeweils mittig jeweils ein Fixierstück 10 vorgesehen, wie der jeweiligen Ovallinie entnommen werden kann.

Alle Fixierstücke 10 sind bei dem Ausführungsbeispiel gemäß den Fig. 1 bis 3 identisch zueinander gestaltet. Jedes Fixierstück 10 ist als einstückiges Kunststoffteil hergestellt, wobei das Fixierstück 10 jeweils einen Rahmenmontageabschnitt sowie einen Fenstermontageabschnitt aufweist. Der Fenstermontageabschnitt ist als Stecksteg 13 ausgeführt. Der Rahmenmontageabschnitt wird durch einen Raststeg 11 gebildet. Wie anhand der Fig. 2 und 3 erkennbar ist, erstreckt der Stecksteg 13 des Fixierstücks 10 sich in betriebsfertig montiertem Zustand in einen Spalt S hinein, der zwischen einer Randkontur des Fensterrahmens 2 des Rahmenfensters 1 und im Randbereich R des Ausschnitts der Fahrzeugwandung F auf einer dem Fahrzeuginnenraum zugewandten Seite verbleibt. Der Stecksteg 13 erstreckt sich in dem anhand der Fig. 3 erkennbaren, montierten Betriebszustand parallel zu dem Randbereich R des Ausschnitts der Fahrzeugwandung F. Der Stecksteg 13 geht auf seiner zum Fahrzeuginnenraum hingewandten Seite über in einen Quersteg, der in den Raststeg 11 mündet. Der Raststeg 11 erstreckt sich in betriebsfertig montiertem Zustand parallel zu einer Innenwand der Fahrzeugwandung F, die zum Fahrzeuginnenraum hingewandt ist. Dabei überragt der Quersteg des Fixierstücks 10, der den Raststeg 11 umfasst, im Bereich des Raststegs 11 den Randbereich R innenseitig der Fahrzeugwandung F radial zu einer Steckachse des Steckstegs 13.

Der Stecksteg 13 ist auf gegenüberliegenden Seiten mit tannenbaumartig abragenden Widerhaken 14 versehen, die elastisch beweglich, nämlich elastisch biegbar, ausgeführt sind. Wie den Fig. 2 und 3 entnommen werden kann, ragen die Widerhaken 14 relativ zu dem Stecksteg 13 im Wesentlichen radial zu gegenüberliegenden Seiten hin nach außen ab. Zudem sind die Widerhaken 14 in einem spitzen Winkel relativ zu einer Steckachse des Steckstegs 13 geneigt. Dabei sind die Widerhaken 14 entgegen der Steckrichtung zum Fahrzeuginnenraum hin geneigt - auf den betriebsfertig montierten Zustand jedes Fixierstücks 10 bezogen.

Beim dargestellten Ausführungsbeispiel verklemmen die dem Randbereich R zugewandten Widerhaken 14 sich kraftschlüssig mit dem Randbereich R - auf einen in den Spalt S eingesteckten Funktionszustand bezogen. Die gegenüberliegenden Widerhaken 14 stützen sich an einem Wandbereich der Randkontur des Fensterrahmens 2 des Rahmenfensters 1 ab, wobei wenigstens ein Widerhaken 14 sich zusätzlich formschlüssig an einem Hinterschnitt dieser Randkontur des Fensterrahmens 2 abstützt.

Der Fensterrahmen 2 ist auf seiner Außenseite mit einem nicht näher bezeichneten Stützrand versehen, der sich fahrzeugaußenseitig des Randbereichs R an dem Randbereich R bzw. an einer Außenseite der Fahrzeugwandung F abstützt.

Beim dargestellten Ausführungsbeispiel ermöglichen die insgesamt sechs Fixierstücke 10 eine über einen gesamten Umfang des Fensterrahmens 2 zentrierte Abstützung des Fensterrahmens 2 innerhalb des Randbereichs R des Ausschnitts der Fahrzeugwandung F, solange der Fensterrahmen 2 in dem Ausschnitt noch nicht fixiert ist. Damit können die Fixierstücke 10 eine Vorjustierung des Rahmenfensters 1 relativ zum Ausschnitt der Fahrzeugwandung F erreichen.

Eine weitere wesentliche Idee der Fixierstücke 10 ist es, dass auf der dem Fahrzeuginnenraum zugewandten Seite der Fahrzeugwandung F ein Adapterrahmen 4 montierbar ist, der den Spalt S zwischen dem Fensterrahmen 2 und dem Randbereich R des Ausschnitts auf der dem Fahrzeuginnenraum zugewandten Seite überdeckt. Zudem dient der Adapterrahmen 4 mit zwei gegenüberliegenden, in Hochrichtung längs der gegenüberliegenden Randbereiche R des Ausschnitts verlaufenden Rahmenprofilen zur Führung eines Verdunklungssystems 6. Der Adapterrahmen 4 wird beim dargestellten Ausführungsbeispiel (Fig. 1) gebildet durch drei Rahmenprofilabschnitte 4, von denen sich zwei an gegenüberliegenden Seitenbereichen des Ausschnitts der Fahrzeugwandung F in Fahrzeughochrichtung über eine gesamte Länge des Ausschnitts - ebenfalls in Hochrichtung gesehen - erstrecken. Die gegenüberliegenden Rahmenprofilabschnitte sind mithilfe von zwei Eckverbindern 5 mit einem horizontalen Rahmenprofilabschnitt des Adapterrahmens 4 verbunden, der parallel zu einer Oberseite des Randbereichs R des Ausschnitts der Fahrzeugwandung F verläuft. Der Adapterrahmen 4 besteht somit beim dargestellten Ausführungsbeispiel aus insgesamt drei Rahmenprofilabschnitten, die an ihren oberen Eckbereichen über Eckverbinder 5 miteinander verbunden sind. Es ergibt sich somit ein U-förmiger Adapterrahmen 4.

Der Adapterrahmen 4 trägt ein Verdunklungssystem 6, das eine zwischen einer kompakt abgelegten Ruhestellung und einer nach unten ausgezogenen Verdunklungsstellung verlagerbare, flexible Verdunklungsbahn umfasst. Die Verdunklungsbahn weist wenigstens ein horizontal erstrecktes Querprofil auf, das an seinen gegenüberliegenden Stirnenden in Führungsnuten der als Führungsschienen dienenden, vertikal erstreckten Rahmenprofilabschnitte des Adapterrahmens 4 geführt ist. Die Verdunklungsbahn ist somit manuell nach unten ausziehbar oder wieder nach oben in die kompakte Ruhestellung zusammenschiebbar, die anhand der Fig. 1 erkennbar ist. In dieser Ruhestellung ist die Scheibenanordnung des Rahmenfensters 1 nahezu vollständig freigegeben.

Der Adapterrahmen 4 weist eine längs des jeweiligen Rahmenprofilabschnitts erstreckte, hinterschnittene Längsnut 7 auf, in die der Raststeg 11 des Fixierstücks 10 einklipsbar ist. Hierzu ist die Längsnut 7 mit wenigstens einem Hinterschnitt 8 versehen und der Raststeg 11 weist wenigstens eine komplementäre Rastnase 12 auf. Der Adapterrahmen 4 ist somit entweder in bereits montiertem Zustand der Fixierstücke 10 auf die Raststege 11 der Fixierstücke 10 werkzeuglos aufrastbar und somit an den Fixierstücken 10 gehalten, oder die Fixierstücke 10 werden in einem ersten Schritt in die Längsnuten 7 der Rahmenprofilabschnitte des Adapterrahmens 4 eingeklipst und anschließend wird der Adapterrahmen 4 im Bereich des Spalts S montiert, indem die Fixierstücke 10 in diesen Spalt S eingeschoben werden.

Bei beiden Montagevarianten rasten die Raststege 11 in die Längsnuten 7 der Rahmenprofilabschnitte des Adapterrahmens 4 lediglich in Steckrichtung der Fixierstücke 10 formschlüssig ein. In Längsrichtung der Längsnuten 7 hingegen sind die Raststege 11 verschiebbar, so dass die Rahmenprofilabschnitte vertikal oder horizontal relativ zu den bereits montierten Fixierstücken 10 verschoben werden können. Falls die Eckverbinder 5 eine solche Längsjustierbarkeit der Rahmenprofilabschnitte verhindern, können diese auch erst nach erfolgter Längsjustierung der Rahmenprofilabschnitte des Adapterrahmens 4 mit den entsprechenden Stirnendbereichen der Rahmenprofilabschnitte verbunden werden.

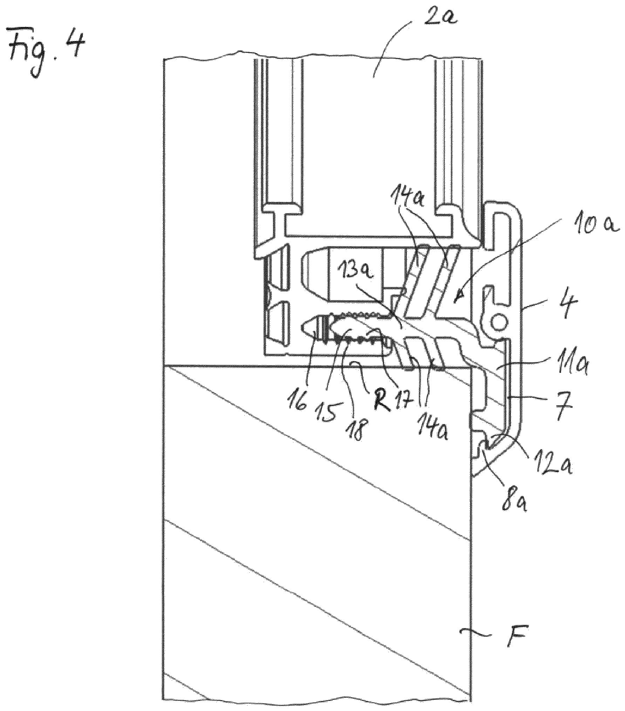

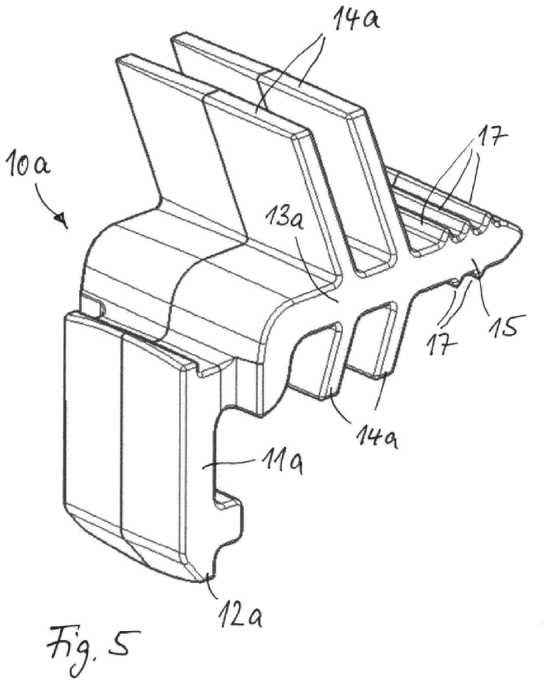

Das Adapterrahmensystem nach den Fig. 4 und 5 entspricht weitgehend dem Adapterrahmensystem nach den Fig. 1 bis 3. Funktionsgleiche oder identische Abschnitte und Teile werden demzufolge mit gleichen Bezugszeichen, teilweise unter Hinzufügung des Buchstabens a versehen. Zur Vermeidung von Wiederholungen wird ergänzend auf die Beschreibung zum Adapterrahmensystem nach den Fig. 1 bis 3 verwiesen. Nachfolgend wird auf die Unterschiede des Adapterrahmensystems nach den Fig. 4 und 5 eingegangen.

Bei der Ausführungsform nach den Fig. 4 und 5 ist ein Fensterrahmen 2a eines Rahmenfensters gemäß Fig. 1 abweichend zu dem Fensterrahmen 2 gemäß den Fig. 1 bis 3 ausgeführt. Der Fensterrahmen 2a weist benachbart zu der Fahrzeugwandung F eine zusätzliche, längserstreckte Stegaufnahme 16 auf, die über eine Tiefe der Stegaufnahme 16 gesehen mit mehreren, zueinander parallel ausgerichteten Aufnahmeprofilierungen 18 versehen ist, die von gegenüberliegenden Seiten zur Mitte der Stegaufnahme 16 hin abragen..

Der Adapterrahmen 4, der identisch zum Adapterrahmen 4 nach den Fig. 1 bis 3 gestaltet ist, ist mittels mehrerer Fixierstücke 10a an dem Fensterrahmen 2a gehalten. Jedes dieser Fixierstücke 10a ist identisch ausgeführt und gemäß den Fig. 4 und 5 gestaltet. Wie den Fig. 4 und 5 entnommen werden kann, weist jedes Fixierstück 10a jeweils einen Raststeg 11a auf, der einschließlich einer Rastnase 12a identisch ausgeführt ist zu dem Raststeg 11 des Fixierstückes 10 nach den Fig. 1 bis 3. Auch das Fixierstück 10a ist analog zu dem Fixierstück 10 einstückig als Kunststoffbauteil ausgeführt. Ein Stecksteg 13a des Fixierstückes 10a ist ebenfalls mit tannenbaumartigen Widerhaken 14a versehen, die elastisch biegbar ausgeführt sind und von gegenüberliegenden Seiten des Stecksteges 13a zu gegenüberliegenden Seiten hin nach außen abragen. Die Widerhaken 14a auf den gegenüberliegenden Seiten sind unterschiedlich lang. Die Widerhaken 14a der einen Seite sind etwas weniger als halb so lang wie die Widerhaken 14a der anderen Seite. Der Stecksteg 13 weist zusätzlich noch eine Stegspitze 15 auf, die in Verlängerung des Stecksteges 13a von den Widerhaken 14a wegragt. Die Stegspitze 15 ist, wie Fig. 5 gut entnommen werden kann, mit mehreren, zueinander parallelen Längsprofilierungen 17 versehen, die gegenüberliegend zueinander von entgegengesetzten Längsseiten der Stegspitze 15 des Stecksteges 13a nach außen abragen. Der Stecksteg 13a taucht mit seiner Stegspitze 15 in die Stegaufnahme 16 ein, wobei die Längsprofilierungen 17 in die Aufnahmeprofilierungen 18 der Stegaufnahme 16 formschlüssig eingreifen.

Die zusätzliche Fixierung des Stecksteges 13a mittels seiner Stegspitze 15 in der Stegaufnahme 16 ermöglicht eine besonders positionssichere Ausrichtung des Adapterrahmens 4 relativ zu dem Fensterrahmen 2a und relativ zu der Fahrzeugwandung F.

## Patentansprüche

1. Adapterrahmensystem für eine fahrzeuginnenraumseitige Anordnung an einem Rahmenfenster (1) eines Caravaning-Fahrzeugs, mit einem Adapterrahmen (4), der wenigstens drei miteinander an Eckbereichen verbundene Rahmenprofilabschnitte aufweist, sowie mit einer Fixiereinrichtung zur Befestigung des Adapterrahmens (4) relativ zu dem Rahmenfenster (1) und relativ zu einem Fahrzeugwandungsausschnitt, in dem das Rahmenfenster (1) montiert ist, **dadurch gekennzeichnet, dass** an jedem Rahmenprofilabschnitt des Adapterrahmens (4) rückseitig wenigstens ein Fixierstück (10, 10a) montierbar ist, das derart gestaltet ist, dass das Fixierstück (10, 10a) kraft- und/oder formschlüssig in einen Spalt (S) zwischen dem Ausschnitt (S) der Fahrzeugwandung und dem Rahmenfenster (1) einfügbar ist.

2. Adapterrahmensystem nach Anspruch 1, **dadurch gekennzeichnet, dass** jedes Fixierstück (10, 10a) als einstückiges Kunststoffteil gestaltet und derart profiliert ist, dass das Fixierstück (10, 10a) werkzeuglos rückseitig an dem zugeordneten Rahmenprofilabschnitt des Adapterrahmens (4) montierbar ist.

3. Adapterrahmensystem nach Anspruch 2, **dadurch gekennzeichnet, dass** der Rahmenprofilabschnitt eine hinterschnittene Längsnut (7) aufweist, und dass das Fixierstück (10, 10a) einen Rahmenmontageabschnitt aufweist, der derart dimensioniert ist, dass der Rahmenmontageabschnitt in die Längsnut (7) einklipsbar und unter geringem manuellem Kraftaufwand längs der Längsnut (7) verschiebbar ist.

4. Adapterrahmensystem nach Anspruch 3, **dadurch gekennzeichnet, dass** der Rahmenmontageabschnitt eine Rastnase (12, 12a) aufweist, die in montiertem Zustand des Fixierstücks (10, 10a) an dem Rahmenprofilabschnitt einen Hinterschnitt (8, 8a) der Längsnut (7) des Rahmenprofilabschnitts hintergreift.

5. Adapterrahmensystem nach einem der Ansprüche 2 bis 4, **dadurch gekennzeichnet, dass** das Fixierstück (10, 10a) einen Fenstermontageabschnitt aufweist, der einen Stecksteg (13, 13a) und wenigstens zwei zu wenigstens einer Seite von dem Stecksteg (13, 13a) abragende, elastisch bewegliche Widerhaken (14, 14a) aufweist.

6. Adapterrahmensystem nach Anspruch 5, **dadurch gekennzeichnet, dass** der Stecksteg (13a) eine Stegspitze (15) mit mehreren, an seiner Außenkontur auf gegenüberliegenden Seiten zueinander parallel beabstandeten Längsprofilierungen (18) aufweist, und dass das Rahmenfenster mit einer längserstreckten Stegaufnahme (16) versehen ist, in die die Stegspitze (15) in betriebsfertig montiertem Zustand kraft- oder formschlüssig eintaucht.

7. Adapterrahmensystem nach Anspruch 6, **dadurch gekennzeichnet, dass** die Stegaufnahme (16) mit zu den Längsprofilierungen der Stegspitze (15) derart komplementären Aufnahmeprofilierungen (18) versehen ist, dass die Stegspitze (15) in betriebsfertig montiertem Zustand formschlüssig in der Stegaufnahme (16) gehalten ist.

8. Adapterrahmensystem nach einem der Ansprüche 5 bis 7, **dadurch gekennzeichnet, dass** der Rahmenmontageabschnitt relativ zu einer Steckachse des Steckstegs (13, 13a) radial versetzt angeordnet ist.

9. Adapterrahmensystem nach einem der vorhergehenden Ansprüche, **dadurch gekennzeichnet, dass** drei Rahmenprofilabschnitte vorgesehen sind, die mittels Eckverbindungen (5) zu einem U-förmigen Adapterrahmen (4) zusammengefügt sind.

10. Adapterrahmensystem nach einem der vorhergehenden Ansprüche, **dadurch gekennzeichnet, dass** an dem Adapterrahmen (4) ein Verdunklungssystem (6) mit einem zwischen einer kompakt abgelegten Ruhestellung und einer längs des Adapterrahmens (4) ausgezogenen Funktionsstellung beweglich gelagerten, flexiblen Verdunklungsbahn befestigt ist.

11. Adapterrahmensystem nach Anspruch 10, **dadurch gekennzeichnet, dass** der Adapterrahmen (4) derart relativ zu dem Rahmenfenster (1) montierbar ist, dass die Verdunklungsbahn in Hochrichtung oben in der Ruhestellung und unten in der Funktionsstellung ausgerichtet ist.

12. Verfahren zur Montage eines Rahmenfensters (1) in einem Ausschnitt einer Fahrzeugwandung (F) eines Caravaning-Fahrzeugs, **dadurch gekennzeichnet, dass** zur Justierung des Rahmenfensters (1) in dem Ausschnitt der Fahrzeugwandung (F) mehrere identische Fixierstücke (10, 10a) vorgesehen sind, die als einstückige Kunststoffteile ausgeführt sind und jeweils einen formsteifen Stecksteg (13, 13a) sowie wenigstens zwei zu wenigstens einer Seite im Wesentlichen radial zu dem Stecksteg (13, 13a) abragende und an dem Stecksteg (13, 13a) angeformte, begrenzt elastisch bewegliche Widerhaken (14, 14a) aufweisen, wobei wenigstens zwei Fixierstücke (10, 10a) an gegenüberliegenden Randbereichen (R) des Ausschnitts zur Ausrichtung des Rahmenfensters (1) relativ zu den Randbereichen (R) eingefügt werden, und dass anschließend das Rahmenfenster (1) in dem Ausschnitt befestigt wird.

13. Verfahren nach Anspruch 12, **dadurch gekennzeichnet, dass** nach einer Ausrichtung und Fixierung des Rahmenfensters (1) der Adapterrahmen (4) an den Fixierstücken (10, 10a) befestigt und relativ zu dem Rahmenfenster (1) in Fahrzeughochrichtung und/oder Fahrzeugquerrichtung oder Fahrzeuglängsrichtung ausgerichtet wird.

14. Verfahren nach Anspruch 13, **dadurch gekennzeichnet, dass** an dem Adapterrahmen (4) ein Verdunklungssystem (6) angebracht wird.

15. Vorrichtung zur Durchführung eines Verfahrens nach Anspruch 12, mit mehreren, zueinander identischen Fixierstücken (10, 10a), die als einstückige Kunststoffteile ausgeführt sind und jeweils einen formsteifen Stecksteg (13) sowie wenigstens zwei zu wenigstens einer Seite im Wesentlichen radial zu dem Stecksteg (13) abragende und an dem Stecksteg (13, 13a) angeformte, begrenzt elastisch bewegliche Widerhaken (14, 14a) aufweisen, wobei die Fixierstücke (10, 10a) im montierten Zustand in einem Spalt (S) zwischen dem Rahmenfenster (1) und einem Randbereich (R) des Ausschnitts der Fahrzeugwandung (F) kraft- oder formschlüssig positioniert sind und sich mit den Widerhaken (14, 14a) an dem Randbereich (R) des Ausschnitts und/oder an einer Randkontur des Rahmenfensters (1) abstützen, und wobei insbesondere der Stecksteg (13a) eine Stegspitze (15) mit mehreren, an seiner Außenkontur auf gegenüberliegenden Seiten zueinander parallel beabstandeten Längsprofilierungen (18) aufweist, und wobei das Rahmenfenster mit einer längserstreckten Stegaufnahme (16) versehen ist, in die die Stegspitze (15) in betriebsfertig montiertem Zustand kraft- oder formschlüssig eintaucht, und wobei insbesondere die Stegaufnahme (16) mit zu den Längsprofilierungen der Stegspitze (15) derart komplementären Aufnahmeprofilierungen (18) versehen ist, dass die Stegspitze (15) in betriebsfertig montiertem Zustand formschlüssig in der Stegaufnahme (16) gehalten ist..

16. Vorrichtung nach Anspruch 15, **dadurch gekennzeichnet, dass** die Fixierstücke (10, 10a) jeweils versetzt zu dem Stecksteg (13, 13a) einen Rahmenmontageabschnitt aufweisen, insbesondere in Form eines Raststegs (11, 11a), der über die Fahrzeugwandung nach innen abragt, und an dem jeweils ein Rahmenprofilabschnitt eines Adapterrahmens (4) werkzeuglos formschlüssig fixierbar ist.
